# EUROPÄISCHE PATENTSCHRIFT

(11) **EP 2 047 586 B1**
(45) Veröffentlichungstag und Bekanntmachung des Hinweises auf die Patenterteilung: **17.03.2010**
(21) Anmeldenummer: 07787943.5
(22) Anmeldetag: 26.07.2007
(51) Int. Cl.: H02K 41/00, H02K 41/03, H02K 11/00, H01F 38/18

(54) **SYNCHRONMOTOR, MOTORSYSTEM, SOWIE VERFAHREN ZUM BETREIBEN EINES MOTORSYSTEMS**
SYNCHRONOUS MOTOR, MOTOR SYSTEM AND METHOD FOR OPERATING A MOTOR SYSTEM
MOTEUR SYNCHRONE, SYSTÈME DE MOTEUR ET PROCÉDÉ POUR COMMANDER UN SYSTÈME DE MOTEUR

(30) Priorität: 03.08.2006 DE 102006036289
(43) Veröffentlichungstag der Anmeldung: 15.04.2009
(73) Patentinhaber: SIEMENS AKTIENGESELLSCHAFT, 80333 München (DE)
(72) Erfinder: DENK, Joachim, 90419 Nürnberg (DE); STOIBER, Dietmar, 90763 Fürth (DE); WEDEL, Bernd, 91096 Möhrendorf (DE)
(86) Internationale Anmeldenummer: PCT/EP2007/057721
(87) Internationale Veröffentlichungsnummer: WO 2008/015156

(56) Entgegenhaltungen:
- WO-A-2004/021376
- US-A- 4 476 408
- US-A- 4 595 870
- US-A- 5 770 909
- JUNJI HIRAI ET AL: "Wireless Transmission of Power and Information and Information for Cableless Linear Motor Drive" IEEE TRANSACTIONS ON POWER ELECTRONICS, IEEE SERVICE CENTER, PISCATAWAY, NJ, US, Bd. 15, Nr. 1, Januar 2000 (2000-01), XP011043386 ISSN: 0885-8993

## Beschreibung

Die Erfindung betrifft ein Motorsystem mit einen Synchronmotor mit einer Anzahl von Statorspulen und mit einem Läufer, der mindestens einen Permanentmagneten aufweist. Die Erfindung betrifft weiterhin ein Verfahren zum Betreiben eines Synchronmotors.

Ein Synchronmotor weist üblicherweise eine Anordnung mit Statorspulen auf, die jeweils in geeigneter Weise mit einem Antriebsstrom angesteuert werden, um ein Antriebs-Magnetfeld zu erzeugen. Das Antriebs-Magnetfeld treibt einen mit mindestens einem Permanentmagneten versehenen Läufer an. Bei einem als Rotor ausgebildeten Läufer wird das Antriebs-Magnetfeld stets so angelegt, dass es senkrecht zu einer Hauptflussrichtung des durch den Permanentmagneten bewirkten Läufer-Magnetfelds besteht.

Ein Synchronmotor zeichnet sich dadurch aus, dass der Läufer lediglich Permanentmagnete und keine Spulen umfasst und somit keinen Kommutator oder sonstige Einrichtungen mit Bürsten, Schleifern und dergleichen benötigt, um einen Spulenstrom dem Läufer zuzuführen. Bei einigen Anwendungen, die einen Synchronmotor verwenden, kann es jedoch notwendig sein, dass ein Versorgungsstrom auf dem Läufer benötigt wird, um einen dort befindlichen Verbraucher mit elektrischer Energie zu versorgen.

Der Einsatz eines Kommutators oder sonstigen Einrichtungen, die Schleifer oder Bürsten verwenden, um einen Versorgungsstrom auf den Läufer zu bringen, ist nachteilhaft, da diese einen erhöhten Verschleiß aufweisen und daher für einen ordnungsgemäßen Betrieb regelmäßig gewartet werden müssen.

Ein Motorsystem mit einem Synchronmotor gemäß dem Oberbegriff des Patentanspruchs 1 ist aus der US 4 476 408 bekannt.

Aus WO 2004/021376 ist ein Verfahren zum draht- und berührungslosen Energie- und Datentransport bei Anlagen bekannt, die aus festen und beweglichen Konstruktionsteilen sowie aus einem Drehstrommotor als Antrieb für die beweglichen Konstruktionsteile bestehen, wobei der Drehstrommotor gleichermaßen zur drahtlosen Übertragung von Energie und/oder Information verwendet wird, wodurch auf den beweglichen Konstruktionsteilen der Anlage angeordnete Einrichtungen mit Energie und/oder Daten versorgt werden.

Aus US 5 770 909 ist die Übertragung elektrischer Energie auf einen Verbraucher am Rotor einer elektrischen Maschine durch einen rotierenden Transformator bekannt.

Es ist Aufgabe der vorliegenden Erfindung, einen Synchronmotor zur Verfügung zu stellen, bei dem auf dem Läufer ein zusätzlicher Versorgungsstrom bereitgestellt werden kann, ohne dass Einrichtungen mit einem erhöhten Verschleiß für das Bereitstellen des Versorgungsstrom benötigt werden. Es ist ferner Aufgabe der vorliegenden Erfindung ein Motorsystem sowie ein Verfahren zum Betreiben eines solchen Motorsystems zur Verfügung zu stellen, bei denen bei niedrigem Verschleiß ein Versorgungsstrom läuferseitig bereitgestellt werden kann.

Erfindungsgemäß wird diese Aufgabe durch das Motorsystem mit einem Synchronmotor nach Anspruch 1, sowie das Verfahren zum Betreiben eines Synchronmotors nach Anspruch 5 gelöst.

Weitere vorteilhafte Ausgestaltungen der Erfindung sind den abhängigen Ansprüchen angegeben.

Das erfindungsgemäße Motorsystem mit einem Synchronmotor ermöglicht es in einfacher Weise, einen Versorgungsstrom in die an dem Läufer angeordnete Spulenwicklung zu induzieren, lediglich durch die Verwendung der Statorspulen, so dass zusätzliche Primärwicklungen an dem Stator nicht notwendig sind. Dazu werden an den Statorspulen neben dem zum Antreiben des Läufers benötigten Antriebsströmen auch entsprechende Primärströme angelegt, die ein Wechsel-Magnetfeld in Richtung der Wicklungsachse der an dem Läufer angeordneten Spulenwicklung erzeugen, um in der Spulenwicklung einen Sekundärstrom zu induzieren. Dadurch steht auf dem Läufer als Sekundärstrom ein Versorgungsstrom zur Verfügung, ohne dass eine verschleißanfällige Bürsten- oder Schleifereinrichtung zur Übertragung des Versorgungsstromes vorgesehen werden muss.

An dem Läufer ist ein Verbraucher vorgesehen, der mit der Spulenwicklung verbunden ist, um den Sekundärstrom an den Verbraucher anzulegen.

Die Spulenwicklung ist so an dem Läufer angeordnet, dass ihre Wicklungsachse parallel zur Hauptflussrichtung des durch den Permanentmagneten bewirkten Läufer-Magnetfelds verläuft. Dadurch kann das zum Induzieren des Versorgungsstroms an die Statorspulen angelegte Wechsel-Magnetfeld das Antriebs-Magnetfeld zum Antreiben des Läufers nicht beeinflussen, da das Wechsel-Magnetfeld keine zusätzliche Antriebskraft auf den Läufer bewirkt.

Weiterhin weist der Läufer einen Rotor auf, wobei der an dem Rotor angeordnete, mindestens eine Permanentmagnet ein Magnetfeld mit mindestens einer radialen Komponente bezüglich einer Rotorachse bewirkt.

Die Spulenwicklung umschliesst den mindestens einen Permanentmagneten zumindest teilweise.

Weiterhin können sich Pole des mindestens einen Permanentmagneten bezüglich einer Rotorachse des Rotors gegenüberliegen.

Das Motorsystem umfasst ausserdem eine Steuereinheit, um den Synchronmotor anzutreiben, durch welche die Statorspulen mit einem jeweiligen Antriebsstrom so angesteuert werden, dass ein Antriebs-Magnetfeld in einer Richtung senkrecht zu der Hauptflussrichtung erzeugt wird, wobei die Steuereinheit weiterhin gestaltet ist, um den jeweiligen Antriebsstrom mit einem jeweiligen Primärstrom zu überlagern, der das Wechsel-Magnetfeld in der Hauptflussrichtung des mindestens einen Permanentmagneten erzeugt.

Die Verwendung der Statorspulen sowohl zum Anlegen des Antriebs-Magnetfeldes als auch zum Induzieren des Versorgungsstroms in die Spulenwicklung ermöglicht es, auf eine zusätzliche Primärwicklung zu verzichten, um den Versorgungsstrom in die Spulenwicklung zu induzieren.

Gemäß einer weiteren Ausführungsform der Erfindung kann die Steuereinheit ausgebildet sein, um dem mit dem entsprechenden Primärstrom überlagerten jeweiligen Antriebsstrom einen entsprechenden Feldschwächungsstrom zu überlagern, so dass ein Gleichmagnetfeld in der Hauptflussrichtung erzeugt wird, um den Synchronmotor in einem Feldschwächungsbetrieb zu betreiben.

Bevorzugte Ausführungsformen der Erfindung werden nachfolgend anhand der beigefügten Zeichnungen näher erläutert.

Es zeigen:
- FIG 1: eine schematische Darstellung eines Motorsystems gemäß einer Ausführungsform der vorliegenden Erfindung;
- FIG 2: eine schematische Darstellung eines Linearsynchronmotors als Beispiel, welches nicht Teil der beanspruchten Erfindung ist.

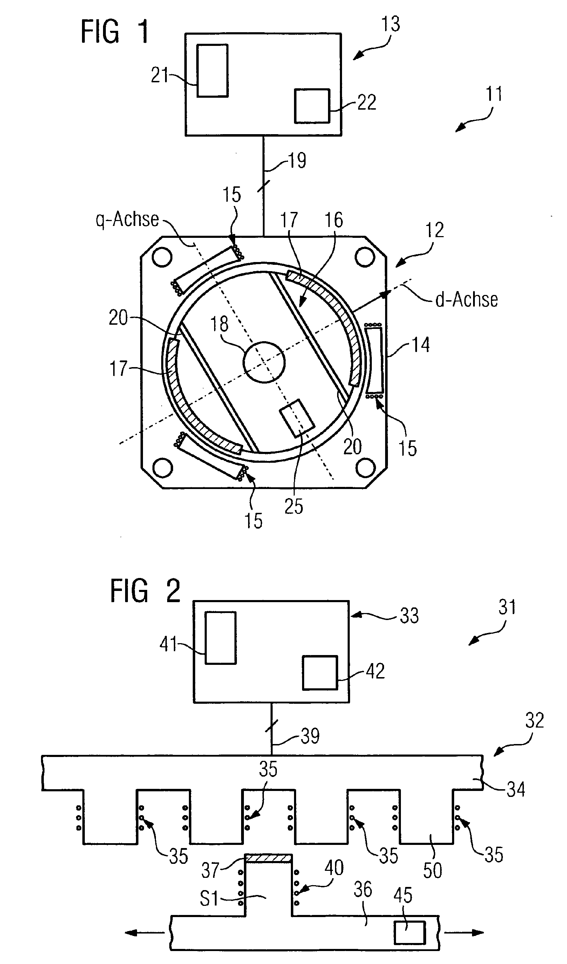

In FIG 1 ist eine schematische Darstellung eines Motorsystems 11 gezeigt, das einen Synchronmotor 12 und eine Ansteuereinheit 13 aufweist. Der Synchronmotor 12 weist ein Gehäuse 14 auf, in dem Statorspulen 15 angeordnet sind. Im vorliegenden ersten Ausführungsbeispiel sind drei Statorspulen 15 um jeweils 120° zueinander versetzt und um einen innen liegenden Rotor 16 angeordnet. Der Rotor 16 weist zwei Permanentmagneten 17 auf, die als Schalenmagnete an bezüglich einer Rotorachse 18 gegenüberliegenden Seiten des im Wesentlichen zylinderförmigen Rotors 16 angeordnet sind. Die Permanentmagnete 17 sind mit ihren Polen zueinander gleichgerichtet, so dass ein Läufer-Magnetfeld in Richtung einer d-Achse des Rotors 16 durch die Permanentmagneten 17 gebildet wird, die einer Hauptflussrichtung entspricht. Die Anzahl der Statorspulen 15 ist im Wesentlichen frei wählbar und jede der Statorspulen 15 kann auch als Statorspulenpaar auf bezüglich der Rotorachse gegenüberliegenden Seiten des Rotors 16 angeordnet sein.

Die Statorspulen 15 sind über entsprechende Ansteuerleitungen 19 mit der Ansteuereinheit 13 verbunden, so dass mit Hilfe eines jeweiligen Antriebsstromes die Statorspulen 15 angesteuert werden können, um ein resultierendes Antriebs-Magnetfeld im Bereich des Rotors 16 zu bilden, das rechtwinklig zur Hauptflussrichtung des durch die Permanentmagneten 17 bewirkten Läufer-Magnetfelds verläuft. Um jeweils die momentane Hauptflussrichtung des Läufer-Magnetfeldes zu bestimmen, muss die Rotorlage ermittelt werden, was durch einen geeigneten Lagedetektor erfolgen kann. Alternativ kann bei einem geberlosen Synchronmotor die Anisotropie einer in den Statorspulen resultierenden Induktivität zum Schätzen der Rotorlage bestimmt werden.

Der Rotor 16 ist weiterhin mit einer oder mehreren (im gezeigten Ausführungsbeispiel zwei) Spulenwicklungen 20 versehen, die mit einem Verbraucher 25 verbunden sind, der entweder innerhalb des Synchronmotors oder an einer sonstigen Position an der Rotorachse 18 angeordnet sein kann und mit den Spulenwicklungen 20 so in Verbindung steht, dass ein darin induzierter Sekundärstrom als Versorgungsstrom zum Betreiben des Verbrauchers 25 verwendet werden kann.

Anstelle einer im Gehäuse 14 des Synchronmotors 12 vorgesehenen Primärwicklung wird der Sekundärstrom zur Versorgung des Verbrauchers 25 mit Hilfe der Statorspulen 15 induziert. Die Statorspulen 15 werden durch die Ansteuereinheit 13 so angesteuert, dass in Richtung der Wicklungsachse der Spulenwicklungen 20 ein Wechsel-Magnetfeld bewirkt wird, um den Sekundärstrom in den Spulenwicklungen 20 zu erzeugen.

In einem bevorzugten Ausführungsbeispiel, wie es in FIG 1 gezeigt ist, verläuft die Wicklungsachse der Spulenwicklungen 20 parallel zur d-Achse der Hauptflussrichtung des durch die Permanentmagneten bewirkten Läufer-Magnetfeldes. In diesem Fall ist es vorteilhaft, dass das Wechsel-Magnetfeld keine Komponente in Richtung einer q-Achse des Rotors 16, die senkrecht auf der d-Achse des Rotors 16 steht, aufweist, so dass der Antrieb des Rotors 16 durch das Wechsel-Magnetfeld nicht beeinträchtigt wird.

Die Ansteuereinheit 13 weist eine Treiberschaltung 21 auf, die über Ansteuerleitungen 19 wechselweise eine jeweilige Ansteuerspannung an die Statorspulen 15 anlegt, so dass beispielsweise bei gleichbleibender Drehgeschwindigkeit des Rotors 16 sinusförmige Stromverläufe von Antriebsströmen durch die Statorspulen 15 fließen, die im Wesentlichen um jeweils 120° zueinander versetzt verlaufen. Dadurch wird im Innern des Synchronmotors 12 ein resultierendes Antriebs-Magnetfeld gebildet, das stets senkrecht zur Hauptflussrichtung des durch die Permanentmagneten 17 bewirkten Läufer-Magnetfeldes verläuft, d.h., in Richtung der q-Achse.

Die Ansteuereinheit 13 weist weiterhin eine Einkopplungsschaltung 22 auf, die einen jeweiligen Primärstrom in den Statorspulen 15 hervorruft, die ein resultierendes Wechsel-Magnetfeld in Richtung der d-Achse, d.h., in Richtung der Wicklungsachse der Spulenwicklungen 20 hervorrufen.

Das Wechsel-Magnetfeld induziert einen Sekundärstrom in den Spulenwicklungen 20, mit dem ein Verbraucher 25 versorgt werden kann. Dadurch ist es möglich, auf eine Primärspulenanordnung im Gehäuse 14 des Synchronmotors 12 zu verzichten, um den Sekundärstrom als Versorgungsstrom für den Verbraucher 25 zu induzieren. Stattdessen werden die Statorspulen 15 dazu genutzt, das Wechsel-Magnetfeld zusätzlich zu dem Antriebs-magnetfeld aufzubauen. Die Einkopplungsschaltung 22 bewirkt die jeweiligen Primärströme in den Statorspulen 15 durch ein Überlagern von gepulsten Primärspannungen auf die Ansteuerspannungen an den Ansteuerleitungen 19.

Die Spulenwicklung 20 kann bei einer Polbedeckung von weniger als 100%, z.B. von 80%, durch die Schalenmagnete um die Schalenmagnete herum geführt werden, so dass der Hauptfluss des durch die Permanentmagneten gebildeten Läufer-Magnetfeldes nicht beeinträchtigt wird. Anstelle der zwei gezeigten Spulenwicklungen 20 kann auch eine einzige Spulenwicklung in dem Rotor 16 vorgesehen sein, die dann vorzugsweise symmetrisch zur Rotationsachse angeordnet ist. Bei Verwendung von zwei oder mehreren Spulenwicklungen 20 ist darauf zu achten, dass diese ebenfalls zur Rotationsachse symmetrisch angeordnet sind, um einerseits keine Unwucht in dem Rotor 16 hervorzurufen und andererseits eine gleichmäßige Induktion des Sekundärstromes zu erreichen.

Um höhere Drehzahlen des Synchronmotors zu erreichen, kann ein Feldschwächungsbetrieb vorgesehen sein, bei dem bezüglich des Läufer-Magnetfeldes entgegengesetzt ein Gleichmagnetfeld mit Hilfe der Statorspulen 15 angelegt wird, um so die durch den Betrieb des Synchronmotors hervorgerufene Spannung an den Statorspulen 15 zu reduzieren. Dazu wird neben den Antriebsströmen durch die Treiberschaltung 21 Feldschwächungsströme an die Statorspulen angelegt, die ein dem Magnetfeld der Permanentmagneten 17 entgegengesetztes Gleichmagnetfeld, d.h. ein Magnetfeld in Richtung der d-Achse aufbauen, um den Hauptfluss in Hauptflussrichtung zu reduzieren. In diesem Fall werden die Statorspulen 15 mit jeweiligen Gesamtströmen angesteuert, die sich aus den Antriebsströmen, den Feldschwächungsströmen und den Primärströmen zur Einkopplung des Sekundärstromes in die Spulenwicklungen 20 zusammensetzen.

In FIG 2 ist dargestellt, dass sich das oben beschriebene Prinzip der Einkopplung eines Sekundärstromes in eine auf dem Läufer angeordneten Spulenwicklung auch bei Linearmotoren vorsehen lässt. In FIG 2 ist ein Linearmotorsystem 31 mit einem Linearsynchronmotor 32 und einer Ansteuereinheit 33 vorgesehen. Der Linearsynchronmotor 32 weist einen Stator 34 mit mehreren Statorvorsprüngen 50 auf, die jeweils eine der Statorspulen 35 tragen. Benachbarte Statorspulen 35 sind separat voneinander ansteuerbar, wobei vorzugsweise jeweils drei zueinander benachbarte Statorspulen 35 separat durch die Ansteuereinheit 33 ansteuerbar sind.

Nahe des Stators 34 ist ein Läufer angeordnet, der bezüglich des Stators 34 in einer linearen Richtung entlang des Stators 34 beweglich angeordnet ist. Der Läufer 36 weist mindestens einen Läufervorsprung 51 auf, auf dem ein Permanentmagnet 37 angeordnet ist, um ein Läufer-Magnetfeld in einer Hauptflussrichtung zu bewirken. Die Hauptflussrichtung ist in Richtung des Stators 34 gerichtet. An dem Läufervorsprung 51 bzw. um den Läufervorsprung herum ist eine Spulenwicklung 40 angeordnet, die mit einem auf dem Läufer angeordneten Verbraucher 45 elektrisch verbunden ist. Auf diese Weise kann den Verbraucher 45 mit elektrischer Energie versorgt werden.

Die Statorspulen 35 des Linearsynchronmotors 32 sind mit der Ansteuereinheit 33 über jeweilige Ansteuerleitungen 39 verbunden. Die Ansteuereinheit 33 weist eine Treiberschaltung 41 auf, um die jeweiligen Antriebsströme für die Statorspulen 35 bereitzustellen. Die Antriebsströme werden so an die Statorspulen 35 angelegt, dass ein zu der Hauptflussrichtung des Permanentmagneten 37 versetztes Antriebs-Magnetfeld im Bereich des Läufers gebildet wird, zu dem sich das durch den Permanentmagneten bewirkte Läufer-Magnetfeld ausrichtet. Je nach gewünschtem Antriebsmoment kann der Versatz des durch die Statorspulen 35 hervorgerufenen Antriebs-Magnetfeld gewählt werden.

Um bei dem Linearsynchronmotor 32 in die Spulenwicklung 40 auf dem Läufer 36 ein Sekundärstrom zu induzieren, werden weiterhin an die Statorspulen 35 Primärströme angelegt, die zu einem Wechsel-Magnetfeld in Richtung der Wicklungsachse der Spulenwicklung 40 des Läufers 36 führen.

Im gezeigten Beispiel entspricht die Wicklungsachse der Spulenwicklung 40 der Hauptflussrichtung des Permanentmagneten 37, es ist jedoch in anderen Ausführungsformen möglich, die Anordnung des Permanentmagneten 37 und die Anordnung der Spulenwicklung 40 voneinander zu trennen und diese an verschiedenen Positionen auf dem Läufer 36 anzuordnen. Im wesentlichen sollte vorgesehen sein, dass das zusätzlich durch die Primärströme angelegte Wechsel-Magnetfeld den Antrieb des Läufers 36 möglichst wenig beeinträchtigt, so dass vorzugsweise die Spulenwicklung 40 und der Permanentmagnet 37 gemeinsam an dem Läufervorsprung 51 angeordnet werden.

Die Primärströme in den Statorspulen 35 werden durch eine Einkopplungseinheit 42 in der Ansteuereinheit 33 bewirkt, wobei die Primärströme zu den Antriebsströmen, die durch die Treiberschaltung 41 bereitgestellt werden, überlagert werden, d.h., die Antriebsströme und die Primärströme werden für jede der einzeln ansteuerbaren Statorspulen 35 miteinander addiert.

## Patentansprüche

1. Motorsystem (11) mit einem Synchronmotor (12,32), wobei der Synchronmotor (12, 32) umfasst:
- eine Anzahl von Statorspulen; und
- einen Läufer (16,36) mit mindestens einem Permanentmagneten (17,37), der ein Magnetfeld in einer Hauptflussrichtung bewirkt,
- wobei der Läufer einen Rotor (16) aufweist, wobei der an dem Rotor angeordnete mindestens eine Permanentmagnet (17) ein Magnetfeld mit zumindest einer radialen Komponente bezüglich einer Rotorachse bewirkt,
**dadurch gekennzeichnet, dass**
der Synchronmotor aufweist:
- mindestens eine Spulenwicklung (20,40), die an dem Läufer (16,36) angebracht ist, so dass in ihr durch eine Komponente eines mit Hilfe der Statorspulen (15,35) angelegten Wechsel-Magnetfeldes ein Sekundärstrom induzierbar ist, der durch einen an dem Läufer anordbaren Verbraucher (25,45) abgreifbar ist,
- wobei die Spulenwicklung den mindestens einen Permanentmagneten (17,37) zumindest teilweise umschließt,
- wobei die Spulenwicklung derart an dem Läufer (16,36) angeordnet ist, dass ihre Wicklungsachse parallel zur Hauptflussrichtung verläuft, und
- mit einer Steuereinheit (13) zum Antreiben des Synchronmotors (12,32), durch welche die Statorspulen (15,35) mit einem jeweiligen Antriebsstrom so angesteuert werden, dass ein Magnetfeld in einer Richtung senkrecht zu der Hauptflussrichtung erzeugt wird, wobei die Steuereinheit (13,33) weiterhin gestaltet ist, um den jeweiligen Antriebsstrom mit einem jeweiligen Primärstrom zu überlagern, der das Wechsel-Magnetfeld in der Hauptflussrichtung des mindestens einen Permanentmagneten (17,37) erzeugt.

2. Motorsystem (11) nach Anspruch 1, wobei an dem Läufer (15,35) ein Verbraucher vorgesehen ist, der mit der Spulenwicklung (20,40) verbunden ist, um den Sekundärstrom als Versorgungsstrom an den Verbraucher (25,45) anzulegen.

3. Motorsystem (11) nach einem der Ansprüche 1 bis 2,
wobei sich Pole des mindestens einen Permanentmagneten (17) bezüglich einer Rotorachse des Rotors (16) gegenüberliegen.

4. Motorsystem (11,31) nach einem der Ansprüche 1 bis 3, wobei die Steuereinheit (13,33) ausgebildet ist, um dem mit dem entsprechenden Primärstrom überlagerten jeweiligen Antriebsstrom ein Feldschwächungsstrom zu überlagern, so dass ein Gleich-Magnetfeld in der Hauptflussrichtung erzeugt wird, um den Synchronmotor (12,32)in einem Feldschwächungsbetrieb zu betreiben.

5. Verfahren zum Betreiben eines Synchronmotors (12,32), wobei der Synchronmotor (12, 32) umfasst:
- eine Anzahl von Statorspulen; und
- einen Läufer (16,36) mit mindestens einem Permanentmagneten (17,37), der ein Magnetfeld in einer Hauptflussrichtung bewirkt,
- mindestens eine Spulenwicklung (20,40), die an dem Läufer (16,36) angebracht ist, so dass in ihr durch eine Komponente eines mit Hilfe der Statorspulen (15,35) angelegten Wechsel-Magnetfeldes ein Sekundärstrom induzierbar ist, der durch einen an dem Läufer anordbaren Verbraucher (25,45) abgreifbar ist,
- wobei die Spulenwicklung den mindestens einen Permanentmagneten (17,37) zumindest teilweise umschließt,
- wobei der Läufer einen Rotor (16) aufweist, wobei der an dem Rotor angeordnete mindestens eine Permanentmagnet (17) ein Magnetfeld mit zumindest einer radialen Komponente bezüglich einer Rotorachse bewirkt,
- wobei die Spulenwicklung an dem Läufer (16,36) angeordnet ist, dass ihre Wicklungsachse parallel zur Hauptflussrichtung verläuft, und
- wobei der Synchronmotor (12,32) angetrieben wird, indem die Statorspulen (15,35) mit einem Antriebsstrom so angesteuert werden, dass ein Antriebs-Magnetfeld in einer Richtung senkrecht zu der Hauptflussrichtung erzeugt wird, wobei der Antriebsstrom mit einem Primärstrom überlagert wird, der das Wechsel-Magnetfeld in der Hauptflussrichtung des mindestens einen Permanentmagneten (17,37) erzeugt.

6. Verfahren nach Anspruch 5, wobei dem mit dem jeweiligen Primärstrom überlagerten entsprechenden Antriebsstrom ein Feldschwächungsstrom überlagert wird, um ein Gleich-Magnetfeld in der Hauptflussrichtung zu erzeugen, so dass ein Feldschwächungsbetrieb des Synchronmotors (11,31) durchführbar ist.

## Claims

1. Motor system (11) having a synchronous motor (12, 32), the synchronous (12, 32) comprising:
- a number of stator coils; and
- a rotor (16, 36) having at least one permanent magnet (17, 37), which produces a magnetic field in a main flux direction,
- wherein the rotor has a rotor part (16), the at least one permanent magnet (17) arranged at the rotor part producing a magnetic field having at least one radial component with respect to a rotor axis,
**characterized in that** the synchronous motor has:
- at least one coil winding (20, 40) which is fitted to the rotor (16, 36) so that a secondary current, which can be tapped off by means of a load (25, 45) which can be arranged at the rotor can be induced in it by a component of an alternating magnetic field applied with the aid of the stator coils (15, 35),
- wherein the coil winding encloses the at least one permanent magnet (17, 37) at least partially,
- wherein the coil winding is arranged at the rotor (16, 36) in such a way that its winding axis extends in parallel with the main flux direction, and
- having a control unit (13) for driving the synchronous motor (12, 32) by means of the stator coils (15, 35) are energized with a respective driving current in such a manner that a magnetic field is generated in a direction perpendicular to the main flux direction, the control unit (13, 33) also being arranged for superimposing on the respective driving current a respective primary current which generates the alternating magnetic field in the main flux direction of the at least one permanent magnet (17, 37).

2. Motor system (11) according to Claim 1, wherein a load, which is connected to the coil winding (20, 40) in order to apply the secondary current to the load (25, 45) as supply current, is provided at the rotor (15, 35).

3. Motor system (11) according to one of Claims 1 to 2, wherein poles of the at least one permanent magnet (17) lie opposite one another with respect to a rotor axis of the rotor part (16).

4. Motor system (11, 31) according to one of Claims 1 to 3, wherein the control unit (13, 33) is constructed for superimposing on the respective driving current, on which the corresponding primary current is superimposed, a field weakening current so that a homogenous magnetic field is generated in the main flux direction in order to operate the synchronous motor (12, 32) in a field weakening mode of operation.

5. Method for operating a synchronous motor (12, 32), the synchronous motor (12, 32) comprising:
- a number of stator coils; and
- a rotor (16, 36) having at least one permanent magnet (17, 37), which produces a magnetic field in a main flux direction,
- at least one coil winding (20, 40) which is fitted to the rotor (16, 36) so that a secondary current, which can be tapped off by means of a load (25, 45) which can be arranged at the rotor can be induced in it by a component of an alternating magnetic field applied with the aid of the stator coils (15, 35),
- wherein the coil winding encloses the at least one permanent magnet (17, 37) at least partially,
- wherein the rotor has a rotor part (16), the at least one permanent magnet (17) arranged at the rotor part producing a magnetic field having at least one radial component with respect to a rotor axis,
- wherein the coil winding is arranged at the rotor (16, 36) so that its winding axis extends in parallel with the main flux direction, and wherein the synchronous motor (12, 32) is driven by the stator coils (15, 35) being energized with a driving current in such a manner that a driving magnetic field is generated in a direction perpendicular to the main flux direction, a primary current being superimposed on the driving current, which primary current generates the alternating magnetic field in the main flux direction of the at least one permanent magnet (17, 37).

6. Method according to Claim 5, wherein a field weakening current is superimposed on the corresponding driving current, on which the respective primary current is superimposed, in order to generate a homogenous magnetic field in the main flux direction so that a field weakening operation of the synchronous motor (11, 31) can be carried out.

## Revendications

1. Système ( 11 ) de moteur comprenant un moteur (12,32 ) synchrone, le moteur ( 12,32 ) synchrone comprenant
- un certain nombre de bobines de stator ; et
- un induit ( 16,36 ) ayant au moins un aimant ( 17,37 ) permanent qui provoque un champ magnétique dans une direction de flux principale ;
- dans lequel l'induit a un rotor ( 16 ), le au moins un aimant ( 17 ) permanent disposé sur le rotor provoquant un champ magnétique ayant au moins une composante radiale par rapport à un axe du rotor ;
**caractérisé en ce que**
le moteur synchrone a :
- au moins un enroulement ( 20,40 ) de bobine qui est mis sur l'induit ( 16,36 ) de manière à pouvoir y induire par une composante d'un champ magnétique alterné appliqué à l'aide des bobines ( 15,35 ) de stator un courant secondaire qui peut être prélevé par un consommateur ( 25,45 ) pouvant être mis sur l'induit ;
- dans lequel l'enroulement de bobine entoure au moins en partie le au moins un aimant ( 17,37 ) permanent ;
- dans lequel l'enroulement de bobine est disposé sur l'induit ( 16,36 ) de manière à ce que son axe d'enroulement s'étende parallèlement à la direction de flux principale ; et
- ayant une unité ( 13 ) de commande pour entraîner le moteur ( 12,32 ) synchrone, par laquelle les bobines ( 15,35 ) de stator sont commandées par un courant d'entraînement respectif de manière à produire un champ magnétique dans une direction perpendiculaire à la direction de flux principale, l'unité ( 13,33 ) de commande étant, en outre, conformée pour superposer le courant d'entraînement respectif à un courant primaire respectif qui produit le champ magnétique alterné dans la direction de flux principale du au moins un aimant ( 17,37 ) permanent.

2. Système ( 11 ) de moteur suivant la revendication 1, dans lequel il est prévu sur l'induit ( 15,35 ) un consommateur qui est relié à l'enroulement ( 20,40 ) de bobine pour appliquer le courant secondaire au consommateur ( 25,45 ) en tant que courant d'alimentation.

3. Système ( 11 ) de moteur suivant l'une des revendications 1 à 2, dans lequel des pôles du au moins un aimant ( 17 ) permanent sont opposés par rapport à un axe de rotor ( 16 ).

4. Système ( 11,31 ) de moteur suivant l'une des revendications 1 à 3, dans lequel l'unité ( 13,33 ) de commande est constituée pour superposer au courant d'entraînement respectif superposé au courant primaire correspondant un courant d'affaiblissement du champ de manière à produire un champ magnétique continu dans la direction de flux principale afin de faire fonctionner le moteur ( 12,32 ) synchrone suivant un fonctionnement à affaiblissement du champ.

5. Procédé pour faire fonctionner un moteur ( 12,32 ) synchrone, le moteur ( 12,32 ) synchrone comprenant :
- un certain nombre de bobines de stator ; et
- un induit ( 16,36 ) ayant au moins un aimant (17,37 ) permanent qui provoque un champ magnétique dans une direction de flux principale ;
- au moins un enroulement ( 20,40 ) de bobine qui est mis sur l'induit ( 16,36 ) de manière à pouvoir y induire, par une composante d'un champ magnétique alterné appliqué à l'aide des bobines ( 15,35 ) de stator, un courant secondaire qui peut être prélevé par un consommateur ( 25,45 ) pouvant être mis sur l'induit ;
- dans lequel l'induit a un rotor ( 16 ), le au moins un aimant ( 17 ) permanent disposé sur le rotor provoquant un champ magnétique ayant au moins une composante radiale par rapport à un axe du rotor ;
- dans lequel l'enroulement de bobine est mis sur l'induit ( 36 ) de façon à ce que son axe d'enroulement s'étende parallèlement à la direction de flux principale ; et
- dans lequel le moteur ( 12,32 ) synchrone est entraîné en commandant les bobines ( 15,35 ) de stator par un courant d'entraînement de façon à produire un champ magnétique d'entraînement dans une direction perpendiculaire à la direction de flux principale, le courant d'entraînement étant superposé à un courant primaire qui produit le champ magnétique alterné dans la direction de flux principale du au moins un aimant ( 17,37 ) permanent.

6. Procédé suivant la revendication 5, dans lequel au courant d'entraînement correspondant superposé au courant primaire respectif est superposé un courant d'affaiblissement du champ, pour produire un champ magnétique continu dans la direction du flux principale, de manière à pouvoir effectuer un fonctionnement à affaiblissement du champ du moteur ( 11,31 ) synchrone.
